(19) Europäisches Patentamt
European Patent Office
Office européen des brevets

(11) **EP 2 870 494 B1**

(12) **EUROPEAN PATENT SPECIFICATION**

(45) Date of publication and mention
of the grant of the patent:
**25.09.2019 Bulletin 2019/39**

(51) Int Cl.:
*B82Y 20/00* (2011.01)    *G02B 1/11* (2015.01)
*G02B 3/00* (2006.01)     *G02B 3/08* (2006.01)
*G02B 5/02* (2006.01)     *G02B 27/10* (2006.01)
*G02B 27/12* (2006.01)

(21) Application number: **13812659.4**

(22) Date of filing: **13.06.2013**

(86) International application number:
**PCT/US2013/045539**

(87) International publication number:
**WO 2014/007957 (09.01.2014 Gazette 2014/02)**

(54) **DECORATIVE FILM ARTICLES UTILIZING FRESNEL LENS FILMS**

DEKORFOLIENARTIKEL MIT FRESNELLINSENFILMEN

ARTICLES À FILMS DÉCORATIFS UTILISANT DES FILMS DE LENTILLE DE FRESNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2012 US 201213540741**

(43) Date of publication of application:
**13.05.2015 Bulletin 2015/20**

(73) Proprietor: **3M Innovative Properties Company**
**St. Paul, MN 55133-3427 (US)**

(72) Inventors:
• **WEBER, Michael F.**
**Saint Paul, Minnesota 55133-3427 (US)**
• **KELLEY, Tommie W.**
**Saint Paul, Minnesota 55133-3427 (US)**
• **BENOIT, Gilles J.B.**
**Saint Paul, Minnesota 55133-3427 (US)**
• **TROTTER, Byron E.**
**Saint Paul, Minnesota 55133-3427 (US)**
• **LORIMOR, Lynn E.**
**Saint Paul, Minnesota 55133-3427 (US)**
• **SHAKLEE, Charles A.**
**Saint Paul, Minnesota 55133-3427 (US)**
• **NELSON, James M.**
**Saint Paul, Minnesota 55133-3427 (US)**

(74) Representative: **Vossius & Partner**
**Patentanwälte Rechtsanwälte mbB**
**Siebertstrasse 3**
**81675 München (DE)**

(56) References cited:
WO-A2-99/50596        JP-A- H08 224 785
JP-A- 2002 139 800     JP-A- 2008 304 586
JP-A- 2008 304 586     US-A1- 2007 064 174
US-A1- 2012 060 920    US-A1- 2012 060 920
US-B1- 6 212 012       US-B2- 7 298 533

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD OF THE INVENTION

This invention relates generally to decorative films having unique appearances, with particular application to such films that incorporate Fresnel lenses. The invention also relates to associated articles, systems, and methods.

## BACKGROUND

About 200 years ago, French physicist Augustin-Jean Fresnel is said to have developed thinner, lighter lenses for use in early 19th century lighthouses. We refer to these lenses today as Fresnel lenses. Since that time, Fresnel lenses have been used in a multitude of applications to provide focusing of light in a thinner and lighter form than could be provided by a bulk optical lens.

JP 2008 304586 A discloses a light deflection element for a rear projection screen. The light deflection element comprises stacked cylindrical Fresnel lenses.

WO 99/50596 A2 discloses optical lens arrays for use in traffic lights. At least one side of a lens is formed as a Fresnel surface.

US 2012/060920 A1 discloses a Fresnel lens array.

## BRIEF SUMMARY

A film stack as recited in independent claim 1 is provided. The dependent claims define embodiments.

We have developed a family of decorative articles in which at least two optical films are combined in a stack, each film having a structured surface with facets that define a plurality of Fresnel lenses that extend parallel to an in-plane axis. The optical films are rotated relative to each other such that first and second in-plane axes of respective first and second optical films are not parallel to each other. The stack may also include one or more diffusers and/or indicia. The Fresnel lenses provide the article with a 3-dimensional appearance. The combination of the differently oriented Fresnel lens films produces visually distinctive decorative patterns.

In addition to the stacked configuration, optical films having the extended Fresnel lenses may be used optionally in combination with one or more other components that may not be or comprise another Fresnel lens film. The extended Fresnel lenses in the optical film may be arranged in a pattern of alternating focusing and defocusing Fresnel lenses which may be contiguous with each other. The structured surface defining the Fresnel lenses may have transmissive facets arranged in a cyclic (for example, sinusoidal) slope sequence from substantially zero to a maximum positive slope to substantially zero to a maximum negative slope and back to substantially zero, the sequence repeating over some or all of the structured surface. Distinctive decorative patterns can be obtained by combining the optical film with indicia that may be fixed in position relative to the optical film with a light-transmissive plate or window. The plate may have a thickness tailored so that an axial distance from the Fresnel lenses to the indicia satisfies a given relationship relative to a focal length or distance of the Fresnel lenses.

We describe herein, inter alia, film stacks that include a first film having first transmissive facets formed thereon that define first Fresnel lenses, and a second film having second transmissive facets formed thereon that define second Fresnel lenses, the second film being disposed to intercept light transmitted by the first Fresnel lenses. Each of the first Fresnel lenses extend generally parallel to a first in-plane axis, and each of the second Fresnel lenses extend generally parallel to a second in-plane axis that is non-parallel to the first in-plane axis. The stack may also include a diffuser disposed to scatter light transmitted by the first and/or second Fresnel lenses. The diffuser may, similar to an indicia layer, be printed on another layer in a spatially uniform manner or according to a desired spatial pattern.

The diffuser may have a haze in a range from 10% to 90%. In some cases, the diffuser may scatter light preferentially along a third in-plane axis, and the diffuser may be oriented such that the third in-plane axis is disposed within less than 60 degrees of the first and second in-plane axes . The diffuser may be incorporated into the first film and/or the second film.

The first and second in-plane axes may form an angle in a range from 2 to 90 degrees. The first Fresnel lenses may be characterized by a first average width, and the second Fresnel lenses may be characterized by a second average width different from the first average width. The first Fresnel lenses may be characterized by a first average pitch and the plurality of second Fresnel lenses is characterized by a second average pitch different from the first average pitch. At least some of the first Fresnel lenses, and at least some of the second Fresnel lenses, may be configured to focus incident parallel light. At least some of the first Fresnel lenses, and at least some of the second Fresnel lenses, may be configured to defocus incident parallel light. The first Fresnel lenses may be arranged to alternate between positive Fresnel lenses configured to focus incident parallel light and negative Fresnel lenses configured to defocus incident parallel light. The positive and negative Fresnel lenses may be contiguous to each other. The first Fresnel lenses may each have a length-to-width aspect ratio greater than 10. The first Fresnel lenses may each be straight in plan view, the second Fresnel lenses may also each be straight in plan view, and the first and second Fresnel lenses in combination may produce an undulating pattern in plan view.

Also disclosed are decorative film articles that include a structured surface having transmissive facets formed thereon that are arranged in a slope sequence from a first substantially zero slope to increasingly positive slopes to a maximum positive slope to diminishing positive slopes to a second substantially zero slope to increasingly negative slopes to a maximum negative slope to diminishing negative slopes to the first substantially zero slope. The slope sequence may be substantially sinusoidal, and may repeat in a substantially uninterrupted fashion across some or all of the structured surface, and the transmissive facets may define a plurality of focusing Fresnel lenses alternating with defocusing Fresnel lenses. The facets, the focusing Fresnel lenses, and the defocusing Fresnel lenses may each extend generally parallel to a first in-plane axis.

The Fresnel lenses may each be straight in plan view, or they may each deviate from a straight line in plan view. Each Fresnel lens may define an undulating path. The decorative film article may include a low refractive index planarization layer covering the transmissive facets.

The film article may be combined with indicia, for example, disposed on a given surface of the article, to produce distinctive visual effects. The indicia may include one or more features that extend generally parallel to a second in-plane axis disposed at an angle ϕ relative to the first in-plane axis, the angle ϕ being in a range from 2 to 88 degrees. The indicia may be disposed an axial distance D1 from the focusing Fresnel lenses, and at least some of the focusing Fresnel lenses may have focal points disposed at an axial distance D2 from the focusing Fresnel lenses, D1 may be greater than (D2)/10, or in a range from (D2)/3 to D2, or can be greater than D2. In other cases, the indicia may be disposed on, and in contact with, the structured surface of the Fresnel lens film.

The film article may include a diffuser disposed to scatter light transmitted by the focusing and defocusing Fresnel lenses. The film article may include visible light diffractive elements tailored to separate visible light transmitted by the decorative film into its constituent colors to produce a multicolored visual effect, and the visible light diffractive elements may extend generally parallel to a second in-plane axis that is generally parallel to the first in-plane axis.

Related methods, systems, and articles are also discussed.

These and other aspects of the present application will be apparent from the detailed description below. In no event, however, should the above summaries be construed as limitations on the claimed subject matter, which subject matter is defined solely by the attached claims.

## BRIEF DESCRIPTION OF DRAWINGS

FIG. 1 is a schematic side- or cross-sectional view of two Fresnel lens films adapted for use in a film stack and for application to a workpiece;
FIG. 2 is a schematic front or plan view of a film stack in which a Fresnel lens film is disposed below or behind another Fresnel lens film;
FIG. 3 is a front or plan view of schematic representations of first and second sets of Fresnel lenses as they may be arranged in a film stack such as that of FIGS. 1 or 2;
FIG. 4 is a schematic side- or cross-sectional view of an optical film that can be used individually or in a film stack such as that of FIGS. 1 or 2;
FIG. 4a is a plan view of the structured surface including Fresnel lenses of FIG. 4;
FIG. 5 is a schematic side- or cross-sectional view of another optical film that can be used individually or in a film stack;
FIG. 6 is a schematic side- or cross-sectional view of another optical film that can be used individually or in a film stack, and FIG. 6a is a plan view of the structured surface including Fresnel lenses of FIG. 6;
FIG. 7 is a graph of facet angle versus position, showing an exemplary sinusoidal slope sequence capable of producing a pattern of alternating contiguous focusing and defocusing Fresnel lenses;
FIG. 8 is a simulated representation of a first family of parallel linear sinusoidal structures in combination with a second family of parallel linear sinusoidal structures, the first and second families of structures having an effective intersection angle of about 6 degrees;
FIG. 9 is a photograph of a film stack comprising two Fresnel lens films and a diffuser, the Fresnel lens films being oriented at an intersection angle of about 30 degrees;
FIG. 10 is a photograph of another film stack comprising two Fresnel lens films oriented at an intersection angle of about 90 degrees;
FIG. 11 is a photograph of an office environment as seen through a Fresnel lens film with a sinusoidal slope sequence;
FIG. 12 is a schematic side- or cross-sectional view of another optical film in combination with indicia, the optical film and indicia being disposed on opposite sides of a thick transparent plate; and
FIG. 13 is a photograph of linear indicia as seen through a Fresnel lens film with a sinusoidal slope sequence.

In the figures, like reference numerals designate like elements.

## DETAILED DESCRIPTION OF ILLUSTRATIVE EMBODIMENTS

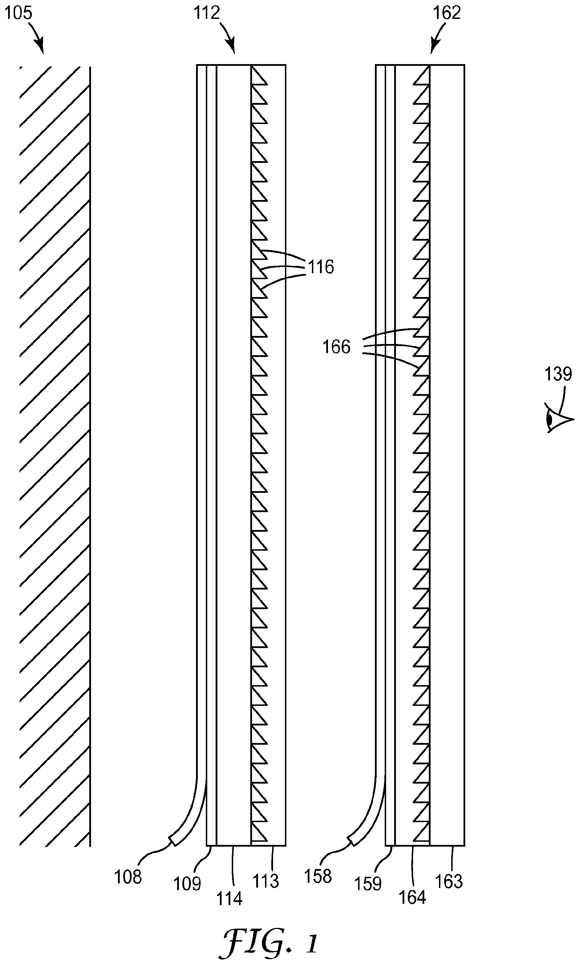

We have found that certain optical films, with certain configurations of Fresnel lenses, can be combined in new and different ways to produce distinctive decorative patterns and visual effects. Two such optical films **112, 162** are illustrated schematically in the side or sectional view of FIG. 1. The Fresnel lenses used in the films can produce film articles having a 3-dimensional appearance.

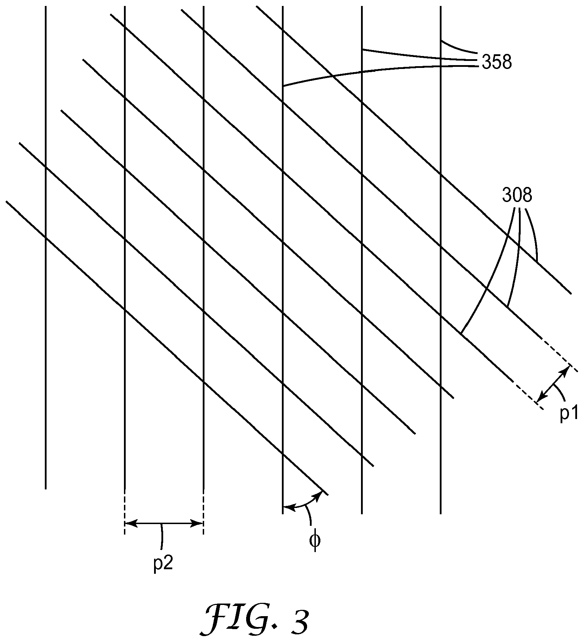

Films **112, 162** are both Fresnel lens films, because they incorporate structured surfaces whose transmissive facets **116, 166** are arranged in slope sequences that define lenses that focus and/or defocus incident parallel light, such lenses sometimes referred to as positive and negative lenses respectively. The facets **116, 166** are shown in FIG. 1 only schematically, with uniform slopes for the facets and no discernible slope sequence, but the reader will understand that they are preferably arranged in a sequence of orientations or slopes that define a plurality of contiguous or non-contiguous focusing and/or defocusing Fresnel lenses as described in more detail below. The Fresnel lenses may be linear or otherwise extended along a particular in-plane direction as shown below in FIG. 3.

The optical film **162** is disposed to intercept light transmitted by the optical film **112.** Although the films **112, 162** are shown separately, they can be readily combined to form a stack using light-transmissive adhesives or other suitable bonding agents. Such stack may also be applied to a workpiece **105** such as a window, wall, or partition. Preferably, the workpiece **105** is transparent or otherwise light transmissive, such that the visual effects of the Fresnel lenses in the films **112, 162** are more noticeable to a user or observer **139.**

The film **112** includes a first layer **113,** a second layer **114,** an adhesive layer **109,** and a release liner **108** which allows the film **112** to be handled before being adhered to the workpiece **105.** A thin layer of prisms (not labeled in FIG. 1) with transmissive facets **116** and substantially no land portion is shown as being cast and cured on the second layer **114,** with the first layer **113** acting as a planarization layer; in alternative embodiments a thin prism layer may be cast and cured on a flat film version of the layer **113,** and the layer **114** may then act as a planarization layer; in still other embodiments the surface of the layer **114** (or the surface of layer **113**) may itself be embossed such that the thin prism layer in essence becomes part of the layer **114** (or part of layer **113**), with the layer **113** (or the layer **114**) then acting as a planarization layer. Planarization layers may be made of a transparent adhesive or other suitable transparent polymer (for example, a ULI material discussed below), but preferably the planarization layer has a significantly lower refractive index than the layer it planarizes, for example, with a refractive index difference of more than about 0.1. For the remainder of this discussion, for simplicity, we will ignore the boundary between the thin prism layer and the layer **114** and assume the thin prism layer is part of the layer **114,** such that the interface between layers **114** and **113** is the structured or faceted surface with facets **116.** At least the layers **113, 114,** and **109** are transparent and/or light transmissive, and the layers **113, 114,** have different refractive indices so that refraction of light can occur at the faceted surface formed therebetween. In some cases, such as when film **112** is to be applied alone on a window for example, it may be desirable to have a layer of polyethylene terephthalate (PET) or other suitable polymer applied to an adhesive planarization layer **113,** as well as the other adhesive layer **109.** In such a construction, tough polymer film layers are provided on both sides of the Fresnel prisms, and removal of the entire film construction from a wall or window may be facilitated, depending on the interfacial adhesion of the other layers. Alternatively, adhesive and liner layers **108** and **109** can be applied to the planar surface of a non-adhesive layer **113.**

Similar to film **112,** the film **162** includes a first layer **163,** a second layer **164,** and a structured or faceted surface with transmissive facets **166** formed between the first and second layers. Also similar to film **112,** a thin layer of prisms (not labeled in FIG. 1) with transmissive facets **166** and substantially no land portion is shown as being cast and cured on the first layer **163,** with the second layer **164** acting as a planarization layer; in alternative embodiments a thin prism layer may be cast and cured on a flat film version of the layer **164,** and the layer **163** may then act as a planarization layer; in still other embodiments the surface of the layer **163** (or the surface of layer **164**) may itself be embossed such that the thin prism layer in essence becomes part of the layer **163** (or part of layer **164**), with the layer **164** (or the layer **163**) then acting as a planarization layer. Planarization layers may be made of a transparent adhesive or other suitable transparent polymer (for example, a ULI material discussed below), but preferably the planarization layer has a significantly lower refractive index than the layer it planarizes, for example, with a refractive index difference of more than about 0.1. For the remainder of this discussion, for simplicity, we will ignore the boundary between the thin prism layer and the layer **163** and assume the thin prism layer is part of the layer **163,** such that the interface between layers **163** and **164** is the structured or faceted surface with facets **166.** The layers **163, 164** are both transparent or otherwise light transmissive, and have different refractive indices. The facets **166** define a plurality of contiguous or non-contiguous focusing and/or defocusing Fresnel lenses as described further below. The film **162** also includes a transparent adhesive layer **159,** and a release liner **158** to allow the film **162** to be handled before being adhered to the front surface of the film **112.** The adhesive and liner layers may alternatively be applied to the planar surface of layer **163,** and a second adhesive layer with liner may optionally be applied to planarize the prism structure, or applied to the planarization layer, and facilitate lamination to a mirrored Fresnel film or transparent substrate such as a window. The surface that is exposed to the environment can be enhanced with one or more of the following functional coatings: antireflection, anti-glare, hard coat, or fluorocarbon "easy clean" coating.

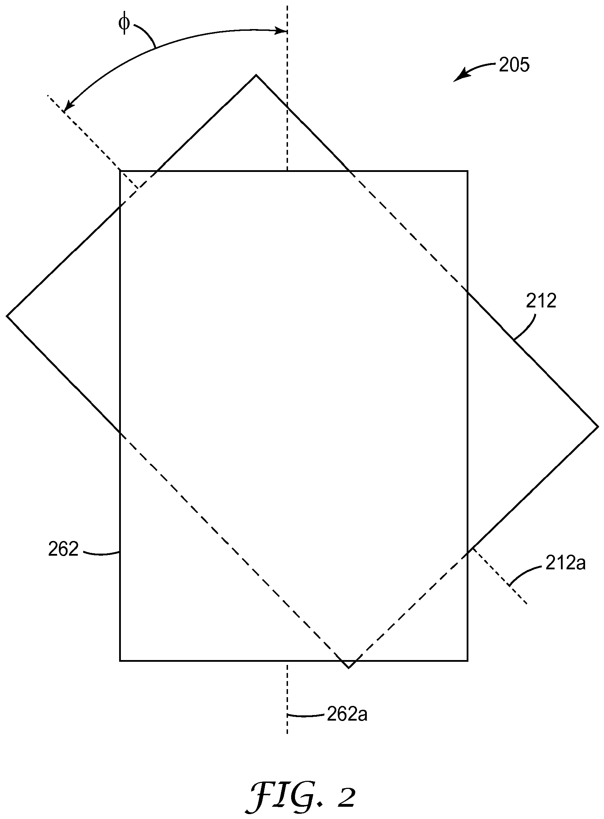

In practice, the films **112, 162** may be manufactured and sold separately to a customer or other user. The user may initially remove the release liner **108** and apply the optical film **112** to the workpiece in a particular orientation. Next, the user may wish to evaluate a range of different relative rotation angles of the two films (refer to angle φ in FIGS. 2 and 3 below) to determine its effect on the appearance of the combination. In this regard, it is beneficial to make the release liner **158** out of a transparent material such as PET, so that the user can place the film **162** against the film **112** and still have the ability to slide, rotate, or shift the film **162** relative to the film **112,** while observing the appearance of the film combination resulting from light that is transmitted through both films, in order to ascertain the optimal orientation. Refer in this regard to the user **139** who is positioned in front of the films. After the desired orientation is selected, the release liner **158** may be removed and the front film **162** applied to the back film **112** to provide a finished, laminated film stack.

The film stack may also include other components or elements such as a diffuser that is disposed to scatter light transmitted by the Fresnel lenses. The diffuser may take the form of a distinct diffuser layer that is added to the films **112, 162,** or it may be incorporated into one or more existing layers of one or both of those films. The diffuser may be or comprise a volume diffuser, for example, a polymer layer within and throughout which particles, voids, or other scattering elements are dispersed, and/or it may be or comprise a surface diffuser such as a textured or otherwise non-smooth surface.

If included in the construction, the diffuser preferably scatters light to a degree that is not too great. If the diffuser scatters light too strongly, it may obliterate the focusing or defocusing characteristics of the Fresnel lenses, and thus eliminate the 3-dimensional appearance of the article provided by the lenses. In some cases, however, some minimal amount of diffusion may be desired to avoid an overly harsh appearance. Light scattering can be characterized by quantities known as haze, transmission, and clarity. For light that is normally incident on an article, film, or layer, the haze may, unless otherwise indicated, refer to the ratio of the transmitted light that deviates from the normal direction by more than 4 degrees to the total transmitted light. The optical haze value can be measured by any suitable means, for example, using a Haze-Gard Plus haze meter, available from BYK-Gardner, Columbia, MD.

Diffusers may be categorized as symmetric (or isotropic) diffusers or as asymmetric (or anisotropic) diffusers. Symmetric diffusers scatter a normally incident collimated light beam into a scattered beam whose divergence angle is substantially the same along all in-plane directions. We have found that for symmetric diffusers, a haze level in a range from 0 to 90%, more preferably 20% to 80%, provides an appropriate amount of light diffusion in typical cases. An asymmetric diffuser scatters a normally incident light preferentially along a particular in-plane direction, referred to as a scattering axis. Such a diffuser may be oriented such that the scattering axis is not perpendicular to any Fresnel lens elongation direction in any of the optical films in the stack. Preferably, the scattering axis is oriented to be parallel to, or at least roughly aligned with (for example, at an angle of less than 60, 45, 30, or 20 degrees), the direction of elongation of the Fresnel lenses in one or both optical films. In this manner, the asymmetric diffuser can provide the article with a softer (hazier) appearance with less disruption of the focusing or defocusing characteristics of the Fresnel lenses, which focusing or defocusing occurs in a plane perpendicular to the elongation axis of the lens. We have found that for asymmetric diffusers, a haze level in a range from 0 to 99% can provide an appropriate amount of light diffusion in typical cases. If light diffusion is provided in the form of a separate diffuser layer, the transmission of such a layer is preferably greater than 50% over some or all of the visible light spectrum. The clarity of a diffuser is often not critical for films or layers that are in contact or close proximity to each other, and thus may be tailored as desired, or left unspecified. When an asymmetric diffuser is used with two Fresnel lens films whose axes of prism elongation are not parallel to each other, the preferred orientation of the scattering axis of the asymmetric diffuser is between the prism elongation axes of the two Fresnel lens films, and preferably halfway between the two prism elongation axes.

Figure 2 is a schematic front or plan view of a film stack **205** that includes a first Fresnel lens film **212** disposed below or behind a second Fresnel lens film **262.** The back film **212,** which may be the same as or similar to film **112** described above, is shown as having a reference axis **212a,** and the front film **262,** which may be the same as or similar to film **162,** is shown as having a reference axis **262a.** For the present discussion, we assume the back film **212** comprises an arrangement of focusing and/or defocusing Fresnel lenses that are each elongated generally parallel to the axis **212a.** We similarly assume the front film **262** comprises an arrangement of focusing and/or defocusing Fresnel lenses that are each elongated generally parallel to the axis **212a.** The films are rotated relative to each other, that is, their axes **212a, 262a** are non-parallel. A nonzero angle φ (Greek letter phi) is formed between the axes **212a, 262a.** We have found that unique aesthetically pleasing visual effects can result from such combinations of films. The angle φ may be in a range from 5 to 90 degrees, for example.

Another factor that affects the appearance of such a film stack is the relative spacing or pitch of the different sets of Fresnel lenses. Figure 3 is a front or plan view of schematic representations of two sets of Fresnel lenses as they may be arranged in a film stack such as that of FIGS. 1 and 2. Here, lines **308** represent the centers of adjacent Fresnel lenses in one film, for example, Fresnel lenses in the back film **212,** and lines **358** represent the centers of adjacent Fresnel lenses in another film, for example, Fresnel lenses in the front film **262.** The films are oriented such that the sets of lenses are tilted at an angle φ relative to each other.

For simplicity, we assume the Fresnel lenses in the back film have a uniform center-to-center spacing or pitch p1. We also assume for simplicity that the Fresnel lenses in the front film have a uniform center-to-center spacing or pitch p2. Fresnel films with uniform spacing are convenient to work with because they can be cut or otherwise converted into any desired size or shape without concern for where the cut should be made on the film. (Fresnel lens films with nonuniform spacing can, however, also be used.) The values of p1 and p2 may be selected as desired to produce a pleasing visual effect. In some cases p1 may be equal to p2, within manufacturing tolerances. For example, the magnitude of (p2-p1)/p1 may be less than 1%. We have found that particularly interesting visual effects are produced when p1 and p2 are moderately different from each other, for example, pl/p2 or its reciprocal may be in a range from 1.5 to 3.

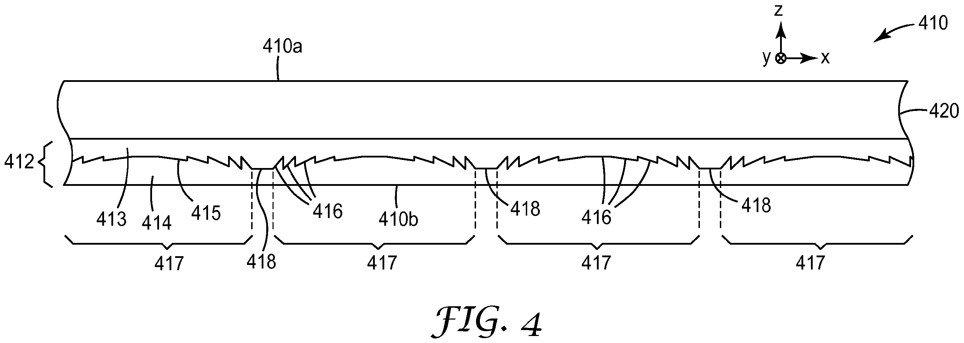

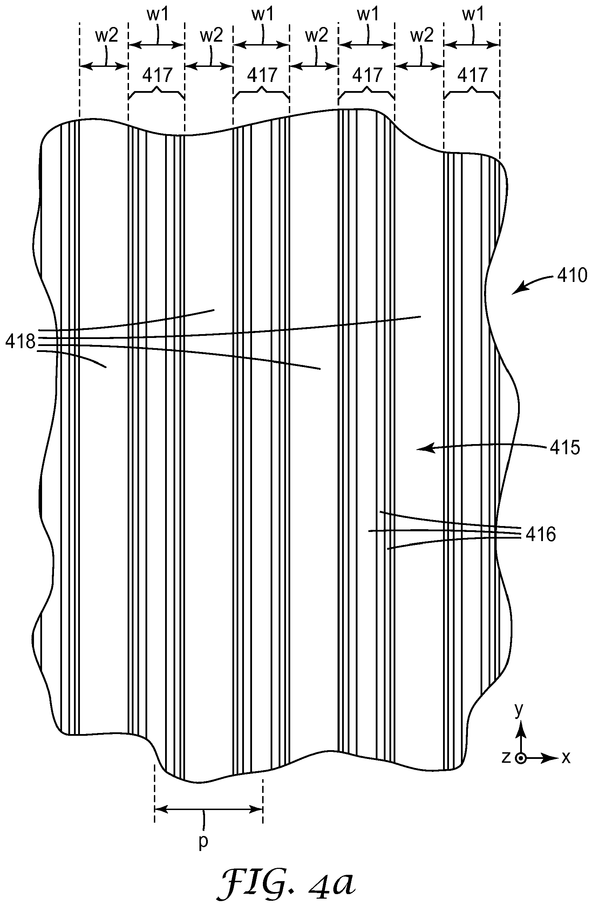

Whether or not either set of Fresnel lenses has uniform center-to-center spacings, the pitches p1, p2 may alternatively refer to average values. Thus, p1 may be the average pitch of the Fresnel lenses in the back film, and p2 may be the average pitch of the Fresnel lenses in the front film, and p1 and p2 may be the same or different as set forth above. The Fresnel lenses may also be characterized in terms of their plan-view widths. Such widths are discussed further below in connection with FIG. 4a. The Fresnel lenses in the different optical films may be characterized by average Fresnel lens widths that are different from each other.

If desired, the Fresnel films of the film stack may be specifically adapted to adhere to each other in a laminate. In some cases, the Fresnel films of the stack may be sold separately, and applied to each other at any desired orientation (rotation angle) by a contractor, customer, or other end-user.

Turning now to FIG. 4, we see there an optical film or film article **410** made up of constituent components that can be tailored to provide the article **410,** or systems that incorporate the article **410,** with a 3-dimensional appearance. The article **410** may correspond to any of the films **112, 162, 212, 262** discussed above. The article includes a first film **412,** which includes a first layer **413** and a second layer **414,** applied to a substrate layer **420.** Some or all of these layers may be polymer-based such that the article, or one or more components thereof, can be manufactured on a conventional film line with conventional polymer based materials. Alternatively or in addition, the article can be made with other known processes and equipment, and may comprise non-polymeric materials, such as glasses, ceramics, metals, and/or other suitable materials. Further discussion of materials is provided below.

The article **410** has opposed major surfaces **410a, 410b,** which may correspond to a front and back major surface, or vice versa. The first film **412** is located at or near the surface **410b,** and includes the first layer **413** and the second layer **414.** An interface **415** between these layers is configured as a faceted surface with individual facets **416, 418.** The faceted surface can be considered a type of structured surface. The facets **416, 418** are transmissive as well as refractive, as the result of a difference in refractive index between the layers **413, 414.** At least the facets **416** are typically substantially flat or planar, and are oriented at a variety of different angles and arranged in a particular sequence, referred to as a slope sequence, such that they collectively form Fresnel lenses **417.** The lenses **417** are shown to all have the same arrangement of facets, and are thus assumed to be all of the same type, for example, they are all focusing-type lenses or defocusing-type lenses. For purposes of this discussion we presume the layer **413** has a greater refractive index than layer **414,** in which case the lenses **417** will all be defocusing-type lenses as a result of the configuration of facets **416** shown in FIG. 4, although the opposite case is also possible if the refractive index relationship is reversed. In FIG. 4, the Fresnel lenses **417** are non-contiguous with each other because they are separated by separation regions provided by facets **418,** but other lens configurations are also contemplated as explained further below.

Either one of the layers **413, 414** may be embossed or cast against a suitable structured tool to impart the desired geometry of the faceted interface **415,** and the other layer (**413** or **414**) may be added or coated on later as a planarization layer. For example, in some cases the layer **414** may be formed first by embossing or casting the layer against a structured tool to provide a structured surface, followed by planarizing the layer **414** with the layer **413** such that the structured surface becomes the faceted interface **415.** Alternatively, the layer **413** may first be embossed or cast to provide a structured surface, and later the layer **414** may be added as a planarization layer so that the structured surface again becomes the faceted interface **415.** In either case, the layers **413, 414** are preferably clear or otherwise suitably light transmissive and of sufficiently different refractive indices so that incident light can be refracted at the interface **415** and pass through the article **410** to the eye of the observer.

In general, the strength or optical power of a Fresnel lens, whether focusing or defocusing, is increased for a given facet geometry if the refractive index difference between the layers in increased, and decreased if the refractive index difference between the layers is decreased. It may be desirable in some cases to design the Fresnel lens film to have a relatively weak optical power, by selecting materials for the first and second layers that have refractive indices close in value. In other cases, it is desirable to design the Fresnel lens film to have a stronger optical power by selecting materials with widely separated refractive indices. From a design standpoint, increasing the refractive index difference also allows a Fresnel lens of a specified focal length or optical power to employ facets with decreased orientations or slopes. Examples of polymer materials that may be used in the light transmissive first and/or second layers include, but are not limited to: high index resins such as those used in prismatic brightness enhancement films made for use in liquid crystal displays, such resins having refractive indices in a range from about n ≈ 1.55 to n ≈ 1.70; ultra low index (ULI) nanovoided materials discussed in patent application publications WO 2010/120864 (Hao et al.) and WO 2011/088161 (Wolk et al.), having refractive indices in a range from about n ≈ 1.15 to n ≈ 1.35; PMMA (n ≈ 1.49); polycarbonate (n ≈ 1.59); silicones (n ≈ 1.4), including silicone adhesives; and fluorocarbon materials (n ≈ 1.35).

Note also that real materials may exhibit a non-negligible dispersion in their refractive indices over the visible spectrum. In some cases, adjacent layers that form the Fresnel prism interface (for example, layers **113** and **114** in FIG. 1) may desirably have the same refractive index difference at all visible wavelengths, or as close to the same difference as possible. In other cases, wherein the refractive index difference is not substantially constant with respect to wavelength over the visible spectrum, narrow rainbow colored stripes may be visible in the film which arise from individual Fresnel prisms. This color can be enhanced or it can be diminished, depending on the desired appearance of the film. If it is to be diminished, the materials of the two layers can be selected to give a better dispersion match. Typically any given material exhibits some degree of index dispersion which in general is different than the amount of dispersion in another material, so a precisely dispersion-less index difference may not be attainable in many cases; in practice, however, small changes in the refractive index difference over the visible spectrum produce little or no visual artifact, and can be ignored. If color stripes are observed and if one wishes to reduce them, the prisms can be made with smaller dimensions. If on the other hand one wishes to enhance the observable color stripes, the materials can be selected with greater dispersion differences, and/or the prisms can be made with larger dimensions.

The article **410** is depicted in the context of a Cartesian x,y,z coordinate system. Preferably, the facets **416** and the Fresnel lenses **417** are linear or otherwise elongated along the y-direction, that is, they extend along an axis perpendicular to the plane of the drawing. This is shown in the plan view of the article **410** provided in FIG. 4a. The facets **416, 418** and the Fresnel lenses **417,** which are separated from each other by separation regions provided by the facets **418,** can each be seen to extend along the y-axis. The Fresnel lenses may each be characterized by a plan view width "w1" as shown in FIG. 4a, and the separation regions may be characterized by a plan view width "w2". The values of w1 and w2 may be chosen by the film designer to provide a suitable visual appearance in the finished article. In some cases, w1 may be less than w2. In other cases, w1 may substantially equal w2. In still other cases, w1 may be greater than w2. The pattern of Fresnel lenses may also be characterized by a plan view center-to-center pitch "p", also shown in FIG. 4a. For these non-contiguous Fresnel lenses of uniform width, p = w1 + w2. The facets **418** may be smooth and highly transparent or they may be roughened or coated to provide a diffuse stripe in the film, or they may be coated or printed with pigmented or dyed colored inks. An individual facet may be continuous or discontinuous along the length of the film and the diffuser or printed and colored coatings on a facet may be continuous or discontinuous. Some or all of the facets **418** may be treated in this manner.

If desired, the article **410** may also include a diffuser disposed to scatter light transmitted by the Fresnel lenses. From a visual standpoint, the diffuser has the effect of softening or dulling the refraction from the Fresnel lenses to avoid an overly harsh appearance. The diffuser may be incorporated into any one or more of layers **413, 414, 420,** or it may be attached to or included within the article **410** as an additional, distinct diffuser layer. The diffuser layer may for example be or comprise a layer of light transmissive matrix material within which is dispersed particles and/or voids to promote scattering of visible light. Suitable particles may include transparent microbeads of suitable size distribution and having a higher or lower refractive index at visible wavelengths than that of the matrix material. The diffuser may be symmetric or asymmetric. If asymmetric, the scattering axis of the diffuser is preferably at least roughly aligned with the elongation axis of the Fresnel lenses, as discussed above. For example, in FIG. 4, each of the Fresnel lenses **417** extends along a direction parallel to the y-axis. In this case it is desirable for an asymmetric diffuser to diffuse normally incident light, which may propagate along the negative z-direction, preferentially along the y-axis. That is, for light that is normally incident on the surface **410a,** the asymmetric diffuser preferentially scatters that light to a greater degree in the y-z plane than in the x-z plane. The rationale for this is that the defocusing action (or focusing action, if layer **414** has a greater refractive index than layer **413**) of the elongated Fresnel lenses **417** occurs primarily or exclusively in the x-z plane rather than in the y-z plane, and thus, much more scattering can be tolerated in the y-z plane than in the x-z plane while still retaining the defocusing (or focusing) characteristics that provide the 3-dimensional appearance.

The article **410** may also include other layers or components, such as an indicia layer. The indicia layer may be or comprise a base film to which a coating of ink or other suitable material has been printed or otherwise applied to form indicia. The indicia layer may be included in the article **410** so as to intercept light transmitted by the Fresnel lenses **417.**

Since the Fresnel structures described herein can be used for decorative applications, indicia can play an important and synergistic role in enhancing the films, film stacks, and film articles for aesthetic purposes. The Fresnel structures provide a basis for interesting and decorative optical effects, and indicia can be added to complement the periodic structure of the Fresnel lens arrays, or alternatively the indicia can be applied to break up the repetitiveness of a periodic lens array. Indicia also provide a convenient means with which to customize a given array of Fresnel lenses. As described elsewhere herein, indicia can be formed using a variety of different techniques, and can be incorporated into or onto one or more constituent layers or surfaces of the articles.

Referring to content and style, the term indicia can include a wide range of types of patterns that can be applied to the decorative films described herein. The indicia can be images of real objects or abstract designs. In order to either complement or break up the periodic appearance of the Fresnel lens arrays, the indicia can alternatively be, for example, known geometric shapes such as lines, rectangles, squares, circles, etc. formed by a non-continuous areal application of printed inks or pigments, diffusers, or the elimination or absence of Fresnel prisms, that are applied in registration with the lens or mirror arrays. The registration can be in terms of distance along the x-axis and the indicia can also be discontinuous along the y-axis. In such cases, the indicia may be tailored to cover less than 10% or less than 25% or less than 50% of the total area of the film in plan view.

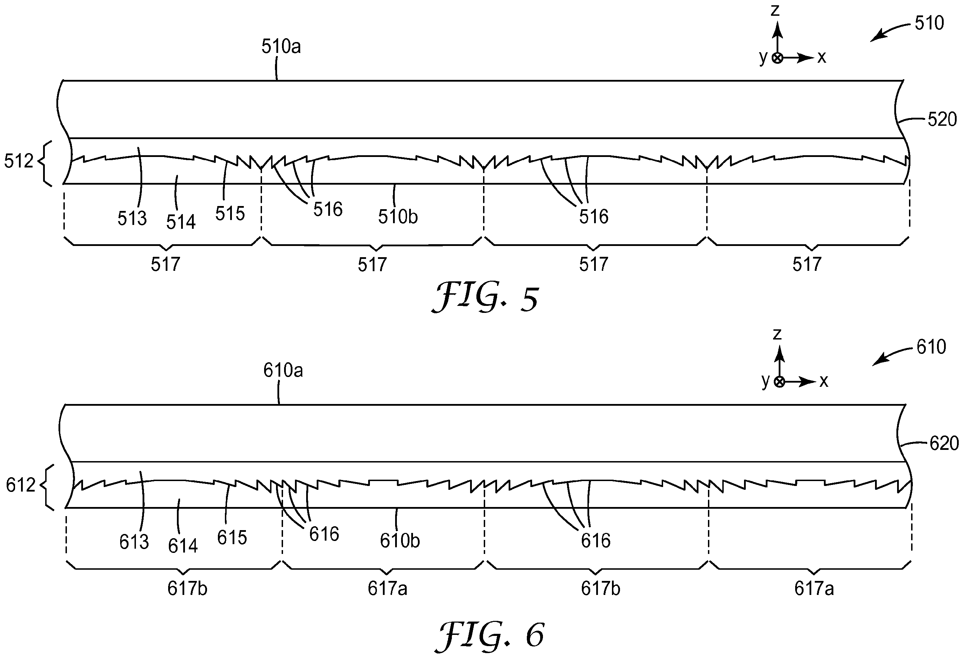

In FIG. 5, we schematically illustrate another film article **510** whose constituent components can be tailored to provide the article **510** with a 3-dimensional appearance. The article **510** has a construction that is similar to that of article **410,** except that the arrangement of Fresnel lenses is different. In particular, rather than an arrangement of noncontiguous Fresnel lenses, as was used in article **410,** the article **510** uses contiguously arranged Fresnel lenses by eliminating the separation regions between lenses.

Other than the change in the Fresnel lens design, the components of article **510** may be similar to, or the same as, corresponding components of article **410.** Thus, for example, article **510,** which has opposed major surfaces **510a, 510b,** includes a first film **512** located at or near the surface **510b,** the first film **512** including a first layer **513** and a second layer **514,** between which an interface **515** is configured as a faceted surface with individual facets **516.** The first film **512,** first and second layers **513, 514,** and facets **516** may be the same as or similar to first film **412,** first and second layers **413, 414,** and facets **416,** respectively, and the orientation or slope sequence of the facets **516** may be the same as that of facets **416** so as to form defocusing Fresnel lenses **517,** assuming the refractive index of layer **513** is greater than that of layer **514.** The facets **516** and Fresnel lenses **517** are preferably substantially linear and elongated along the y-axis, analogous to the view of FIG. 4a.

Similar to the article **410,** the article **510** may also include additional layers or elements, such as a diffuser and/or indicia, as discussed elsewhere herein.

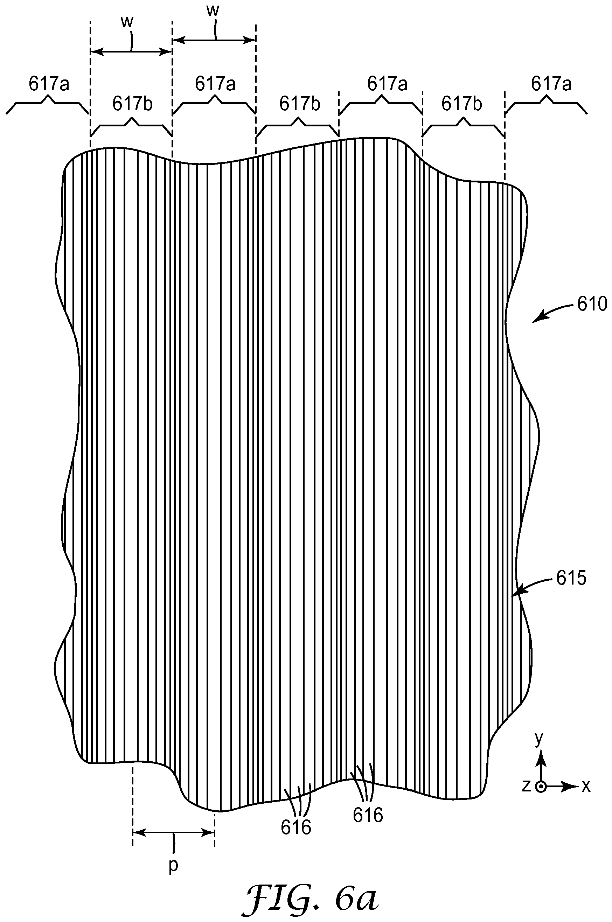

In FIG. 6, we schematically illustrate another film article **610** whose constituent components can be tailored to provide the article **610** with a 3-dimensional appearance. The article **610** has a construction that is similar to that of article **510,** except that the arrangement of Fresnel lenses is different. In particular, rather than an arrangement of contiguous defocusing Fresnel lenses, as was used in article **510,** the article **610** has an alternating arrangement of contiguous focusing Fresnel lenses **617a** and defocusing Fresnel lenses **617b.**

Other than the change in the Fresnel lens arrangement, the components of article **610** may be similar to, or the same as, corresponding components of article **510.** Thus, for example, article **610,** which has opposed major surfaces **610a, 610b,** includes a first film **612** located at or near the surface **610b,** the first film **612** including a first layer **613** and a second layer **614,** between which an interface **615** is configured as a faceted surface with individual facets **616.** The first film **612,** first and second layers **613, 614,** and facets **616** may be the same as or similar to first film **512,** first and second layers **513, 514,** and facets **516,** respectively, except that the orientation or slope sequence of the facets **616** is different.

The slope sequence of facets **616** is cyclic, for example, sinusoidal, such that the facets form focusing lenses **617a** that alternate with defocusing lenses **617b.** (If the refractive index of layer **614** is greater than that of layer **613,** then lenses **617a** are defocusing and lenses **617b** are focusing.) Evaluating the slope sequence of facets **616** along the interface **615,** we see that the slope ranges from a zero slope (for example, in the center of lens **617b**), to increasingly negative slopes, to a maximum negative slope (for example, at the boundary between lens **617b** and **617a**), to diminishing negative slopes, to a zero slope (for example, in the center of lens **617a**), to increasingly positive slopes, to a maximum positive slope (for example, at the boundary between lens **617a** and **617b**), to diminishing positive slopes, to a zero slope (for example, in the center of lens **617b**). (Note that other descriptions of this slope sequence are also possible by shifting the evaluation region, for example, the slope sequence can be described as ranging from a first zero slope to increasingly positive slopes to a maximum positive slope to diminishing positive slopes to a second zero slope to increasingly negative slopes to a maximum negative slope to diminishing negative slopes to the first zero slope. A "zero slope" need not be precisely horizontal but may be within a few degrees of horizontal.) Due to the repetitive nature of the shape of the interface **615,** this slope sequence may repeat in a substantially uninterrupted fashion across the interface **615.**

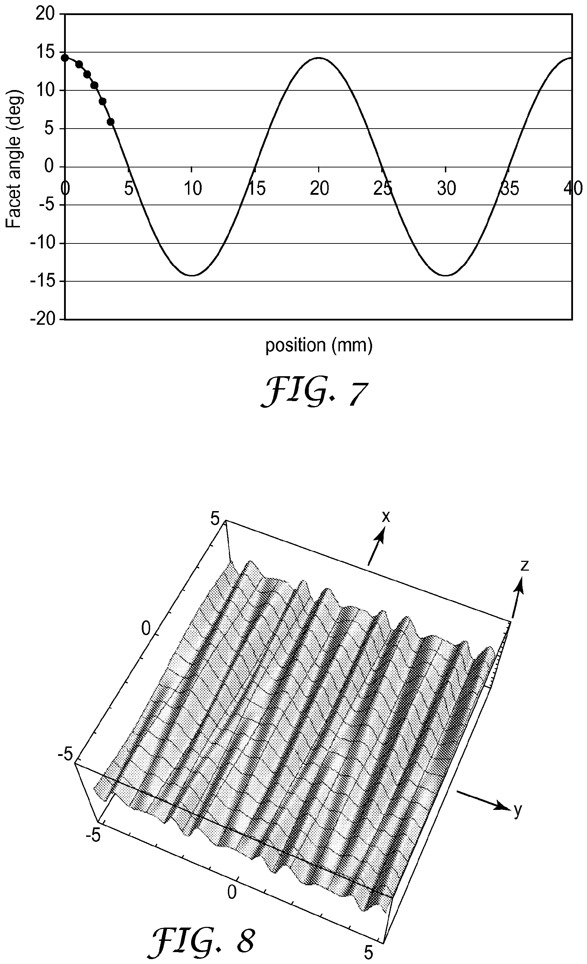

In this regard, FIG. 7 shows a graph depicting an exemplary sinusoidal slope sequence that can produce alternating contiguous focusing and defocusing Fresnel lenses. The smooth sinusoidal curve represents how the facet angle changes as a function of position, where position is measured along an in-plane direction (for example, the x-axis in FIG. 6a) perpendicular to the direction of elongation of the lenses. In this example, the facet angle ranges between a maximum of about +14.3 degrees to a minimum of about - 14.3 degrees. The smooth sinusoidal curve is not exactly representative of the slope sequence, since the Fresnel lens is segmented into numerous individual facets each of which is typically flat and has a single slope. Therefore, dots are superimposed on the smooth curve to represent the slopes of individual facets of the structured surface.

Referring again to FIGS. 6 and 6a, the facets **616** and the Fresnel lenses **617a, 617b** are linear or otherwise elongated along the y-direction, that is, they extend along an axis perpendicular to the plane of the drawing. This is shown in the plan view of the Fresnel lenses **617a, 617b** provided in FIG. 6a. The facets **616** and the Fresnel lenses, which are contiguous to each other with substantially no intervening space or land area in between, can each be seen to extend along the y-axis. The Fresnel lenses may each be characterized by a plan view width "w" as shown in FIG. 6a. The pattern of Fresnel lenses may also be characterized by a plan view center-to-center pitch "p", also shown in FIG. 6a. For contiguous Fresnel lenses of uniform width, w = p.

Similar to the article **510,** the article **610** may also include additional layers or elements, such as a diffuser and/or indicia, as discussed elsewhere herein.

Numerous modifications can be made to the articles described herein. For example, a diffuser may comprise multiple distinct layers rather than only one layer. An indicia layer may likewise comprise multiple distinct layers. Alternatively, a diffuser and indicia layer may be combined into only a single layer. If distinct diffusers and indicia layers are provided, they may be arranged in any order relative to the Fresnel lenses. An asymmetric diffuser can be cut into an embossing or casting tool by creating a low amplitude, high frequency undulation of the prism height along the length axis of each prism or portions of the prisms.

In a given embodiment, Fresnel lenses of a given type may be uniformly the same, or they may be different from each other, or they may be some combination thereof. For example, the Fresnel lenses **417** in FIG. 4, or the Fresnel lenses **517** in FIG. 5, may all have the same effective curvature and/or the same width w, or the Fresnel lens curvatures and/or widths may differ according to a regular or irregular pattern. Numerous combinations of focusing and/or defocusing Fresnel lenses are contemplated, including embodiments with only focusing Fresnel lenses, embodiments with only defocusing Fresnel lenses, embodiments with focusing Fresnel lenses interspersed with defocusing Fresnel lenses, and all of the foregoing embodiments with the Fresnel lenses arranged in a contiguous fashion as well as all of the foregoing embodiments with the Fresnel lenses arranged in a non-contiguous fashion, with separation regions between the lenses.

The Fresnel lenses need not be precisely linear in plan view. For example, the Fresnel lenses (and the prisms or facets that make up the lenses) may follow paths that are curved, and/or paths that extend generally along a particular in-plane direction but that oscillate (for example, sinusoidally or in any other periodic or near-periodic fashion) or wander (for example, characterized by deviations that are low in frequency, small in amplitude, and not periodic) with respect to that direction. Tooling used for embossing or casting/curing (for example, an embossing drum or casting wheel) can be fabricated with non-linear patterns such as a wandering sand dune appearance. Although this can be accomplished with diamond tooling on a drum using multiple passes with a fast plunging tool, an alternative method is to use gray scale lithography wherein the prisms are created by the variable depth exposure of a photoresist with rastered laser beams. The non-linear patterns can also be achieved by forming pliable prisms on an elastic substrate which can then be non-uniformly stretched in different areas across a surface. Such a construction was made by casting prisms of a pliable resin onto a pliable substrate such as, for example, vinyl, urethane, or silicone films. Pliable Fresnel lenses are also useful when applying the films to non-planar surfaces that are curved along both in-plane axes, that is, compound curved surfaces. Some examples are lighting fixtures, luminaires, automobile exterior or interior surfaces, computer mouse surfaces and mobile handheld electronic devices such as some phones, notepads or notebook computers.

The Fresnel lenses may have a plan view aspect ratio that is limited only by the outer physical boundaries or edges of the article, that is, each of the Fresnel lenses may extend from one such boundary or edge to an opposite boundary or edge. Alternatively, the Fresnel lenses may each extend along a particular direction but have a length that is truncated relative to the physical boundaries of the article. When truncated Fresnel lenses are used, it may be desirable for aesthetic purposes to arrange them such that small blank areas (for example, small flat window areas, characterized by the absence of any tilted or angled prism facets) separate adjacent Fresnel lenses, which small blank areas may be spaced regularly or randomly along a given row of truncated Fresnel lenses. The small blank areas can be achieved in at least two ways. In one case, the metal tool can be cut such that the cutting tool is retracted and does not cut a set of adjacent prisms for a predetermined length on the tool, or the prisms can be later machined flat on the metal tool at the predetermined lengths. Alternatively, if the prisms are cut continuously on a tool, the resulting cast polymer replicate of the tool can be planarized in local areas (corresponding to the small blank areas) by coating (planarizing) the prisms with a second film in those chosen areas. For Fresnel lenses, if a planarizing polymer coating is used, it should be transparent and relatively close to (in comparison to air or ULI material) the refractive index of the prisms, for example, $\Delta n < 0.2$. With either method of effectively eliminating prisms in local areas, random or image forming patterns can be made via the absence of a prismatic structure on the film. Such spatial patterns can be considered indicia for the Fresnel films.

Fresnel lenses that are elongated along a particular direction may have a plan view aspect ratio of at least 2, 5, 10, 20, or 50, for example. In some cases, the Fresnel lenses may have circular, square, or other non-elongated shapes in plan view.

Exemplary embodiments of the disclosed articles comprise thin polymer-based films that are laminated, coextruded, and/or coated such that the article is self-supporting, flexible, and conformable to a target surface or object. In this regard, the disclosed articles may be configured such that the back surface of the article attaches to a window, wall, or other object of interest, and light may enter the article through the back surface and exit through the front surface, but light may also or alternatively enter and exit through the front surface. The disclosed articles may include additional layers and coatings to facilitate such applications, including for example, planarization layer(s), adhesive layer(s), release liner(s), hard coat(s), and the like. Colored and/or neutral gray dyes, pigments, and the like can be added to one or more of the constituent layers for further visual effect. Reflective color films such as multilayer interference films can provide striking visual effects when combined with the Fresnel lens films. Narrow band color mirror films, examples of which can be found in U.S. Patent 6,531,230 (Weber et al.), "Color Shifting Film", have been found to be particularly attractive in this construction. Narrow band mirrors have a transmission that is high (for example, greater than 50%) when averaged over the visible spectrum, but a low transmission and high reflectivity (for example, at least 30, 50, 60, 70, 80, 90, or 95% reflectivity) over a narrow spectral band in the visible, where the narrow spectral band may have a full width at half maximum (FWHM) of less than 150, or less than 100, or less than 70, or less than 50 nm, or in a range from any of these values to 10 nm. When laminated to or otherwise combined with the Fresnel lens films disclosed herein, such narrow band mirrors can produce a colored flash, for example, of blue, green, or red, at given observation angle. In addition, the appearance is different when viewed from opposite sides of the laminate due to the differing angles of incidence and transmission of light for the mirror film depending on whether the narrow band mirror is in front of or behind the Fresnel lens film, or, whether light passes through the Fresnel lens before or after passing through the narrow band mirror. The disclosed articles may be made of any suitable materials now known or later developed, including materials other than polymer-based films. The articles may include one or more thick and/or rigid and/or brittle component such that the resulting article is rigid rather than flexible.

In cases where a reflective layer has a high reflectivity over a portion of the visible spectrum and a low reflectivity and high transmission over another portion of the visible spectrum, the resulting construction, which can be referred to as a dichroic Fresnel mirror, functions as a Fresnel mirror for those visible wavelengths having a high reflectivity, and functions as a Fresnel lens for those visible wavelengths having a low reflectivity. Dichroic Fresnel mirrors are thus a class or subset of the larger group of Fresnel mirrors.

Simulation

The appearance of film stacks having misaligned sets of linear Fresnel lenses can be modeled or simulated. The result of one such simulation is provided in FIG. 8. For purposes of that figure, we assumed a first plurality of Fresnel lenses were all strictly linear, parallel, and contiguous, for example, having a plan view similar to that shown in FIG. 6a. We likewise assumed a second plurality of Fresnel lenses were linear, parallel and contiguous. Linear Fresnel components are advantageous because, in the context of fabricating an embossing tool by diamond turning grooves in a cylindrical tool, it is far easier to fabricate such an embossing tool with straight grooves than with grooves that deviate in some fashion in the transverse direction.

For purposes of FIG. 8 we also assumed that each set of Fresnel lenses used a sinusoidal slope sequence such as that depicted in FIGS. 6 and 7. This provides alternating contiguous focusing and defocusing lenses in each of two Fresnel lens films.

For the simulation, the first Fresnel lens film was represented by a first sine wave of the form

$$\sin(t + 2\pi x) ,$$

where

$$t = 3\sin(x^2) ,$$

and x is the position along the (in-plane) x-axis, which we may assume is the cross-web direction for a polymer film. The second Fresnel lens film was represented by a second sine wave, of the form

$$\sin(2\pi x') .$$

Here, x' is the position along an (in-plane) x' axis, the x' axis being rotated relative to the x-axis by an angle $\phi$, hence:

$$x' = x\cos(\phi) + y\sin(\phi) ,$$

and

$$y' = -x\sin(\phi) + y\cos(\phi) .$$

The sum of the two functions can be used to simulate the combined appearance of the two functions, that is, of a first Fresnel lens film and a second Fresnel lens film rotated by an angle $\phi$:

$$z = 0.2\sin(t + 2\pi x) + 0.2\sin(2\pi x'),$$

where z in this equation is a measure of the apparent height of a three dimensional surface, but we may also interpret z as representing brightness for purposes of the simulation. If we select the angle $\phi$ to be about 6 degrees, the simulated brightness from the above equations is as shown in FIG. 8.

The reader is again cautioned that the z-axis in FIG. 8 represents brightness, not position, for purposes of this simulation. However, the x- and y-axes in FIG. 8 do represent position at the output surface of the film combination. Inspection of FIG. 8 reveals that an intensity pattern that varies in two orthogonal in-plane directions, that is the x- and y-directions, can be produced from the combination of two purely linear functions, if one of the linear functions is rotated relative to the other one. The intensity pattern has an aesthetically pleasing sand dune-like or gentle wave-like appearance.

Examples and Further Discussion

Some articles having a decorative appearance were made and evaluated. Each of these articles incorporated at least one linear Fresnel lens film.

In a first example, a film stack was made using two differing Fresnel lens films and a diffuser.

The Fresnel lens films were made by a casting and UV curing process using a metal roll tool that had been diamond turned. Grooves in the metal tool defined two adjacent regions of different sinusoidal groove patterns: a short periodicity pattern and a long periodicity pattern. When this tool was used to cast and cure a prism layer on a film substrate, the grooves produced small linear prisms defining two adjacent regions of the prism layer, each region having parallel linear prisms whose individual prism slopes changed along the cross-web direction in a sinusoidal fashion. In each of the regions, the prisms had a constant pitch (center-to-center prism distance) of 75 microns, and slopes that changed with cross-web direction in a sinusoidal manner, one cycle of each sinusoidal pattern having slopes that ranged from a maximum of +14.3 degrees, then diminishing to substantially zero degrees, then diminishing further to a minimum of -14.3 degrees, then increasing to substantially zero degrees, and then increasing still further back to the maximum of + 14.3 degrees. Any given sinusoidal cycle in either of these regions defined a set of one focusing Fresnel lens contiguous to one defocusing Fresnel lens. In the short periodicity region, the period of each one of the sinusoids was 20 mm, and in the long periodicity region the period of each one of the sinusoids was 40 mm. The cross-web width of the short periodicity region was about 23 cm, that is, 11.5 pairs of the narrower focusing/defocusing linear Fresnel lenses. The cross-web width of the long periodicity region was also about 23 cm, that is, almost 6 pairs of the wider focusing/defocusing linear Fresnel lenses. In addition to the focusing and defocusing Fresnel lenses within each region being contiguous to each other, the two regions were also contiguous to each other, along a shared linear boundary. The Fresnel lenses in the short periodicity region had a first uniform focal length (magnitude), and those in the long periodicity region had a second uniform focal length (magnitude), the first focal length being about 16 mm and the second focal length being about 35 mm.

Several optical films were made having these Fresnel structures formed in a prism layer atop a flat 2 mil (50 micron) thick PET base film, the prism layer being made of a UV-cured resin of refractive index n ≈ 1.65. The resin was filled with nano-zirconia particles in order to achieve the high index of refraction. Such resin is described for example in U.S. Patent 7,264,872 (Walker, Jr. et al.). The optical films were cut or slit to produce: a first Fresnel lens film whose structured surface was substantially completely characterized by the 40 mm period sinusoid and the wider focusing/defocusing linear Fresnel lenses whose focal length was about 35 mm; and a second Fresnel lens film whose structured surface was substantially completely characterized by the 20 mm period sinusoid and the narrower focusing/defocusing linear Fresnel lenses whose focal length was about 16 mm. An acrylic plate with a soft diffusing surface was also obtained. The acrylic plate had a thickness of 3 mm and a haze of 46%, the haze being substantially symmetric.

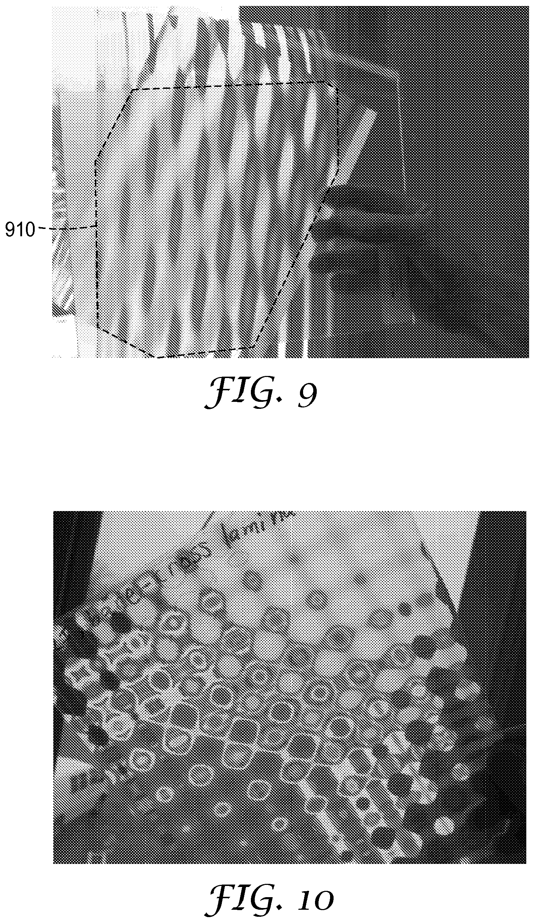

For this first example, a film stack was made by placing together in a stack the first Fresnel lens film, the second Fresnel lens film, and the acrylic diffuser plate, with no adhesive between the three components, and with the Fresnel lenses of both optical films exposed to air. The relative orientation of the Fresnel lenses in the two optical films could be changed by rotating one optical film relative to the other, and interesting visual patterns were obtained over a wide range of relative rotation angles. FIG. 9 is a photograph of the film stack of this first example when held in front of an office window during the day, where the relative rotation angle between the first and second optical films was about 30 degrees. Due to the various sizes and shapes of the different components of the stack and the relative rotation between the optical films, overlap between all three components of the stack (the first Fresnel lens film, the second Fresnel lens film, and the acrylic diffuser plate) was obtained only in the region labeled **910** in FIG. 9. Inspection of FIG. 9 reveals that in the overlap region **910,** one can see sand dune-like or gentle wave-like patterns similar to that of FIG. 8. (A similar construction was later made, wherein both Fresnel lens films were planarized with a ULI material of refractive index 1.17 and laminated together with the prisms of the two films facing inwards, using 3M™ Optically Clear Adhesive 8171. The appearance of this laminate was substantially the same as the first example.)

In a second example, a film stack was made using two similar Fresnel lens films.

For this second example, Fresnel lens films were made in substantially the same way as in the first example, except that the optical films were cut or slit to produce: a first Fresnel lens film whose structured surface was substantially completely characterized by the 20 mm period sinusoid and the narrower focusing/defocusing linear Fresnel lenses whose focal length was about 16 mm; and a second Fresnel lens film whose structured surface was substantially the same as the first Fresnel lens film. The Fresnel lenses on both of these films were planarized with a ULI material of refractive index 1.17, and the planarized films were then laminated together with the prisms of the two films facing inwards, using 3M™ Optically Clear Adhesive 8171. After planarization with the ULI coating, the focal length of the lenses was approximately 30 mm.

The relative orientation of the Fresnel lenses in the two optical films could be changed by rotating one optical film relative to the other before lamination, and interesting visual patterns were obtained over a wide range of relative rotation angles. The stack produced gentle wave-like patterns, similar to FIGS. 8 and 9, for small rotation angles between the prism films. FIG. 10 is a photograph of the laminated film stack of this second example when held in front of an office window during the day, where the relative rotation angle between the first and second optical films was about 90 degrees, that is, the prism axes of the two films were approximately orthogonal. Inspection of FIG. 10 reveals an intricate pattern that includes circles, squares, and other varied shapes.

In a third example, the visual appearance of only one Fresnel lens film was evaluated.

For this third example, a Fresnel lens film was made in substantially the same way as in the first and second examples, except that the optical film was cut or slit to produce a Fresnel lens film whose structured surface was substantially completely characterized by the 40 mm period sinusoid and the wider focusing/defocusing linear Fresnel lenses; furthermore, the structured surface, rather than being exposed to air, was planarized with an ultra low index (ULI) coating of refractive index 1.17. The ULI planarization layer caused the focal length of the focusing/defocusing lenses to increase to approximately 60 mm.

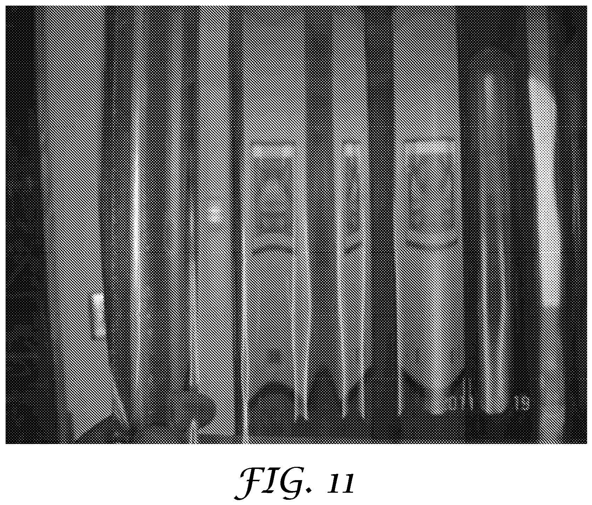

FIG. 11 is a photograph of this Fresnel lens film of this third example when held up in an office setting, with the axis of elongation of the Fresnel lenses oriented vertically. Inspection of FIG. 11 reveals that the film distorts objects located behind the film according to a 1-dimensional wave-like transformation, similar in appearance to a corrugated "tin roof". Optical films such as this can be applied to a window or other transparent substrate to allow for high transmission or ambient illumination while also providing some degree of privacy. Note that the distortion still allows objects behind the film to be somewhat discernible. The low refractive index ULI planarization layer is useful so that the structured (Fresnel) surface can be buried or embedded within the film or product where it is protected from scratches or contamination by dirt or debris. Optical films such as this can be combined with a diffuser having high light transmission. In this example and in other disclosed embodiments, the diffuser may be patterned to provide a regular, irregular, or random pattern of high and low haze for additional visual effects. Such spatially patterned diffusers can be applied to one or more suitable surfaces of the optical films, and can be considered indicia for the films.

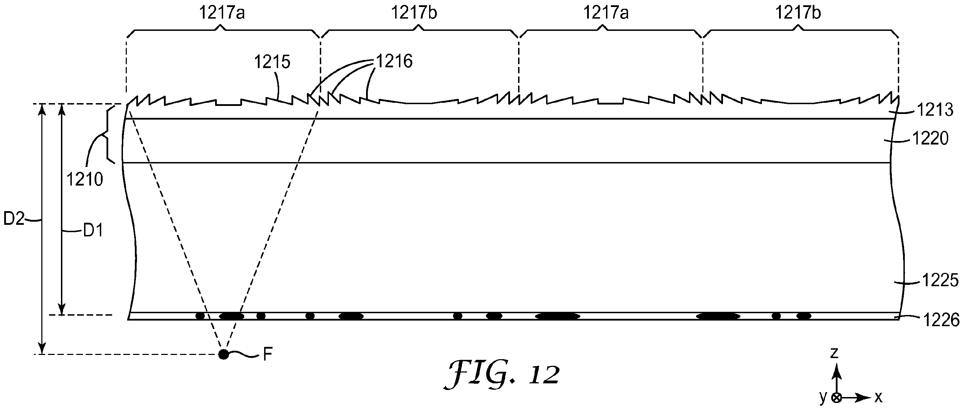

Optical films that have alternating focusing and defocusing linear Fresnel lenses, for example, by utilizing a sinusoidal slope sequence for the prism facets, can also be combined with indicia to provide still more visually interesting products. The most interesting visual effects have been found to occur when the indicia is located at a particular distance or range of distances relative to the Fresnel lenses, which range of distances is related to the focal length or focal distance of the lenses. An exemplary arrangement is shown in FIG. 12.

In FIG. 12, an indicia layer **1226** is held at a fixed axial distance D1 relative to Fresnel lenses **1217a, 1217b,** which lenses are formed by facets **1216** of a structured surface **1215**. As shown, the Fresnel lenses **1217a** are focusing lenses, and the Fresnel lenses **1217b** are defocusing lenses, each lens preferably extending along a prism axis parallel to the y-axis. The lenses **1217a, 1217b** may in this regard be the same as or similar to Fresnel lenses **617a, 617b** of FIG. 6, or to other Fresnel lenses disclosed herein. The structured surface **1215** is one major surface of a prism layer **1213,** which may for example be cast and cured on a transparent base film **1220.** The structured surface **1215** is shown as being exposed to air, but it may alternatively be planarized with a ULI material or other low refractive index material and attached to other films or layers, as discussed elsewhere herein. Together, the base film **1220** and the prism layer **1213** may form an optical film **1210.**

In order to maintain a desired distance between the Fresnel lenses (for example, the structured surface **1215**) and the indicia layer **1226,** the optical film **1210** and the indicia layer **1226** may be adhered or otherwise attached to opposing major surfaces of a light-transmissive plate **1225** of suitable thickness. The plate **1225** may be window glass, an acrylic partition, or another suitable light-transmissive solid structure. Alternatively, the indicia may be physically separated from the Fresnel lenses by a much larger space, for example, the indicia may be placed on a wall or other object that is physically distant from, for example, at least 1 meter from, the Fresnel lenses.

The indicia layer **1226** is preferably at least partially light transmissive, and in some cases it has a high optical transmission over some or all of the visible light spectrum. The indicia layer may be made with a gray scale of black and white inks, and it may also or alternatively be made with colored inks, such as blue, green, yellow, and/or red, and so forth. In other cases, however, it may have a low optical transmission, and it may even be opaque. We have found that several features of the indicia layer **1226** can have a significant impact on the appearance of the construction. One feature is the axial distance from the indicia layer **1226** to the Fresnel lenses. The other feature is the orientation of the indicia layer relative to the Fresnel lenses, particularly when the lenses are elongated along a first in-plane axis and the indicia comprises indicia features that are elongated parallel to a second in-plane axis.

With regard to the distance from the indicia layer to the Fresnel lenses, we have observed that if the indicia layer is placed too close to the prism film, particularly in relation to the focal length or focal distance of the Fresnel lenses, the Fresnel lenses provide little or no visual distortion of the indicia. Little or no distortion in the context of decorative film articles may be considered uninteresting and disadvantageous. For example, if the focal length of the lenses is much greater than the thickness of the optical film **1210,** which is typically the case, and the thick plate **1225** is omitted from the construction of FIG. 12, such that the indicia layer is positioned directly against the film **1210,** the Fresnel lenses **1217a, 1217b** will provide little or no visual distortion of the indicia.

The relative position of the indicia relative to the Fresnel lenses can be quantified by comparing the axial distance D1 from the Fresnel lenses to the indicia layer to a distance associated with the focal length of the Fresnel lenses. The latter focal length-related distance may be complicated by the fact that the actual focal point or focus of a given Fresnel lens is influenced by the optical thickness (physical thickness multiplied by refractive index) of the layer(s) to which it is attached. In the case of the embodiment of FIG. 12, the most significant optical thickness is the optical thickness associated with the thick plate **1225.** In the figure, the focal point F (which is actually a line extending parallel to the y-axis, since the lens **1217a** and facets **1216** also extend parallel to the y-axis) for one of the focusing Fresnel lenses **1217a** is shown. The point F represents the point at which collimated light normally incident on the lens **1217a** is actually focused after propagating through the other optical layers of the construction, such as base film **1220** and plate **1225.** The point F is disposed at an axial distance D2 relative to the Fresnel lens **1217a.** If the thick plate **1225** and the indicia layer **1226** were removed, such that the optical film **1210** was isolated and completely immersed in air or vacuum, the point F would move closer to the lens **1217a** (to a point we may refer to in this discussion as F'), and the distance D2 would be shorter (which we may refer to in this discussion as D2'). The shifted focal point F' and the shortened distance D2' correspond substantially to the focal point and focal length of the lens **1217a** when the optical film **1210** is considered in isolation, for example, before it is applied to the plate **1225.**

With this background, we can quantify the distance relationships for which we have found the Fresnel lenses to provide significant distortion of the indicia. Noticeable visual effects are observed when D1 is in a range from about D2'/3 to about D2'/10. More interesting visual effects are observed when D1 is greater than D2'/3. Striking visual effects are observed when D1 is greater than D2'/1.5. Therefore, D1 is preferably greater than about D2'/10, or in a range from (D2')/3 to D2', or, in some cases, greater than D2'. In many practical embodiments, the difference between D2' and D2, and between F' and F, is relatively small. Thus, the foregoing relationships can also be satisfied where D2' is replaced by D2.

Another feature of the indicia layer **1226** that can have a significant impact on the appearance of the construction is the orientation of the indicia layer relative to the Fresnel lenses, particularly when the lenses are elongated along a first in-plane axis and the indicia comprises indicia features that are elongated parallel to a second in-plane axis. In such cases, the visual appearance can be substantially enhanced by orienting the second in-plane axis to be neither parallel nor perpendicular to the first in-plane axis, but oriented at an angle $\phi$ that is oblique. For example, $\phi$ may be selected to be in a range from 45 to 89 degrees, or from 30 to 89 degrees. The desired value of $\phi$ may depend on the distance D1 described above, but in many cases the effect is attractive if $\phi$ is between 60 and 90 degrees, and causes distortion that is still appealing at angles that are less than 45 degrees but at least about 30 degrees.

The effect of the relative orientation angle $\phi$ and the relative position of the indicia layer were evaluated in connection with a fourth example. In the fourth example, a linear Fresnel lens film was combined with an indicia layer having linear indicia features.

For this fourth example, a Fresnel lens film was made in substantially the same way as in the third example, except that the structured surface of the optical film was not planarized with the ULI coating. This Fresnel lens film thus had a structured surface that was substantially completely characterized by the 40 mm period sinusoid and the wider focusing/defocusing linear Fresnel lenses, the focal length of each of these being about 35 mm. An indicia film was then obtained. The indicia film was an 80 micron thick vinyl film on which was printed simulated wood grain indicia, the vinyl film also being embossed on one side with small elongated depressions similar to wood texture. This indicia film was substantially the same as an indicia film used as a component in simulated woodgrain film products sold more than one year ago in the United States by 3M Company as 3M™ DI-NOC™ Film. The wood-grain indicia features were substantially elongated along a particular in-plane axis.

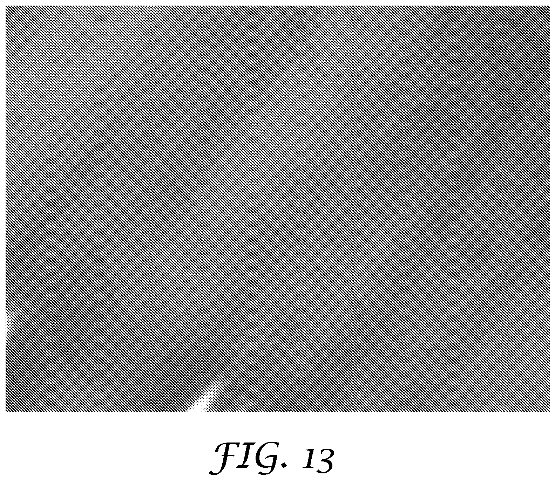

The Fresnel lens film was held in front of the indicia film and the combination was observed. If the films were oriented such that the wood-grain axis was parallel or perpendicular to the lens axis, little distortion of the wood-grain pattern was observed. Also, if the Fresnel lens film was held too close to the indicia film, little distortion of the wood-grain pattern was observed. More distortion, which produced a visually interesting wavy appearance, was observed when the orientation angle φ was oblique and when the Fresnel lens film was held at a substantial distance from the indicia film (the films being separated by a thick air gap). FIG. 13 is a photograph of the result for an orientation angle φ of about 60 degrees and a separation (DI) of about 40 mm.

In a fifth example, additional combinations of Fresnel lens films and indicia films, attached to opposite sides of thick acrylic plates, were investigated.

For this fifth example, a Fresnel lens film was made in substantially the same way as in the second example, such that optical film had a structured surface substantially completely characterized by the 20 mm period sinusoid and the narrower focusing/defocusing linear Fresnel lenses. The focal length of the focusing/defocusing lenses was about 16 mm. A sample of 3M™ Fasara™ Decorative Window Film, consisting of straight parallel lines on a transparent film, was used as an indicia layer. A 12 mm thick acrylic plate was then obtained, and the Fresnel lens film and the indicia layer were laminated to the opposed major surfaces of the plate. The Fresnel lens film was oriented such that facets of the Fresnel lenses were exposed to air. Further, the films were oriented such that the elongation axis of the indicia made an angle φ of about 45 degrees relative to the lens axis. This same construction was repeated for a 6 mm thick acrylic plate, and for a 3 mm thick acrylic plate. A wavy appearance was observed in all three cases, but with diminishing amplitude as the plate thickness diminished from 12 to 6 to 3 mm. The wave amplitude for the 3 mm plate was rather small.

In a sixth example, additional combinations of Fresnel lens films, indicia films, and acrylic plates, similar to those of the fifth example, were investigated.

For this sixth example, the same Fresnel lens film, indicia film, and acrylic plates were used as those of the fifth example, except that the structured surface of the Fresnel lens film was planarized with a ultra low index (ULI) coating, having a refractive index of about 1.18. This increased the focal length of the Fresnel lenses from the original 16 mm to about 30 mm. Three samples were again evaluated, with the Fresnel lens film and indicia film attached to opposite sides of the acrylic plate and oriented at an angle φ of about 45 degrees relative to each other, and 12 mm, 6 mm, and 3 mm acrylic plates were again used. A wavy appearance was again observed in all three cases, but with reduced amplitudes relative to those of the fifth example. For example, the embodiment in this sixth example using the 6 mm plate had a wave amplitude about the same as the wave amplitude of the 3 mm plate embodiment in the fifth example. For the embodiment in this sixth example using the 3 mm plate, the effect is quite small.

In a seventh example, additional combinations of Fresnel lens films, indicia films, and acrylic plates, similar to those of the fifth example, were investigated.

For this seventh example, a Fresnel lens film was made in a similar way as in the fifth example, except that a different tool was used which produced a different geometry of linear Fresnel lenses in the Fresnel lens film. In this case, the Fresnel lenses were again composed of linear parallel prisms of the same high index (n = 1.65) material on the same 50 micron PET base film, and the prisms again had a slope sequence that changed with cross-web direction in a sinusoidal manner, each sinusoidal cycle defining a set of one focusing Fresnel lens contiguous to one defocusing Fresnel lens, and the periodicity of the sinusoids was again 20 mm. However, for this Fresnel lens film, the prism facets were more strongly tilted, such that the slope sequence ranged from a maximum of +26 degrees, then diminishing to substantially zero degrees, then diminishing further to a minimum of - 26 degrees, then increasing to substantially zero degrees, and then increasing still further back to the maximum of +26 degrees. These Fresnel lenses had a focal length of about 10 mm.

Similar to the fifth and sixth examples, the Fresnel lens film was then attached to one major surface of an acrylic plate (with prism facets exposed to air), and the indicia film with linear markings was attached to the opposite major surface of the plate, the linear markings of the indicia film oriented at an angle φ of about 45 degrees relative to the axis of the Fresnel lenses. Acrylic plates of 12 mm, 6 mm, and 3 mm thickness were again used. A significant wavy appearance was observed in all three cases, and the wave amplitudes were greater and more noticeable relative to those of the fifth example for corresponding plate thicknesses.

The Fresnel lens films and combinations thereof described herein can also comprise visible light diffractive elements that are tailored to separate visible light into its constituent wavelengths or colors to produce a multicolored or rainbow-like visual effect. The visible light diffractive elements may comprise grooves, ridges, prisms, or other features sized to provide one or more diffraction gratings. When used with a Fresnel mirror film and/or a Fresnel lens film having linearly extending Fresnel structures (mirrors or lenses, respectively), the diffraction grating(s) may also extend linearly for example, using straight linear grooves or other diffractive features. The axis of elongation of the diffraction grating(s) may be oriented as desired with respect to the elongation axis of the Fresnel structures of the Fresnel mirror film and/or Fresnel lens film. In some cases, the diffracting grating axis may be substantially parallel to the axis of the Fresnel structures. In some cases, the diffracting grating axis may be substantially perpendicular to the axis of the Fresnel structures. In some cases, the diffracting grating axis may be oriented at an oblique angle relative to the axis of the Fresnel structures.

If a diffraction grating is included, it can be laminated to the Fresnel film, or in the case of the diffractive grooves parallel to the Fresnel prism grooves, the diffractive grooves can be cut directly into the face of some or all of the larger grooves on an embossing/casting tool.

In one example, equilateral triangle-shaped prisms (60 degree apex angle) with a 600 nm repeat distance and width were cut into the face of each groove on a copper tool, the copper tool otherwise being substantially the same as that used above for the first example. Thus, the copper tool had 75 micron wide grooves whose groove angles were arranged in a sinusoidal slope sequence having a period of 40 mm, and each groove also included the smaller 600 nm diffractive grooves. The diffractive grooves produced diffractive sub-structures on the Fresnel prisms in replicated polymer films. Brilliant rainbow patterns were observed on both the copper tool and on the cast and cured polymer films made with this tool. The diffractive Fresnel lens film can be combined with other components such as another Fresnel lens film (either with the diffractive features or without) in the same manner as described above.

In some cases, patterned planarization of the faceted or structured surface can be implemented to provide additional visually distinctive features to the disclosed films and combinations. For example, selected portions of the structured surface can be image-wise coated with a polymer material or other suitable material whose thickness is great enough to planarize the structured surface. In the resulting product, Fresnel lenses may be formed everywhere on the structured surface except for the selected portions that had been planarized by the image-wise coating, or Fresnel lenses may be formed in the selected portions but with substantially diminished optical power due to a substantially diminished refractive index difference on opposite sides of the structured surface, compared to the refractive index difference for the remainder (non-image-wise coated portions) of the structured surface. The absence of Fresnel lenses (or reduced Fresnel lens power) in the selected portions provides a noticeable image that can add to the visual distinctiveness of the article. The image-wise coating can have any desired image or pattern. Such spatial patterns, formed by planarizing the prisms with index matching or near-matching materials in selected areas, can be considered indicia for the Fresnel films.

We have observed that, for the purpose of forming an image, the image forming planarizing material can but need not precisely match the refractive index of the prisms. Rather, it may only have a refractive index that is substantially different than that of the material (or air) in contact with the remaining portions of the prism surfaces. For example, an adhesive of refractive index 1.49 was laminated in small circular areas on a sinewave Fresnel lens surface whose prisms had a refractive index n = 1.65. The remainder of the lens surface was in contact with air. Even though the adhesive did not match the refractive index of the Fresnel prisms, the mismatch or difference in refractive index between the adhesive and the prisms was much less than the mismatch or difference in refractive index between air and the prisms for the remainder of the structured surface, which was sufficient to render the circle patterns clearly observable.

When used in a laminate, the remainder of the prism surface can be planarized by coating with a ULI material or other material having a refractive index substantially different than the image forming planarizing layer. The image-wise coating can be a patterned adhesive layer that is used to bond the Fresnel film to a surface or to another Fresnel film in the absence of a low index planarization layer. In this manner, the remainder of the Fresnel prism surface remains in contact with air after lamination.

The transparent image-wise planarization pattern can be formed with clear, or color tinted, adhesives, post-curable polymeric layers, epoxies, or printing inks, using any suitable printing technique such as flexographic, gravure, screen, or ink jet.

Unless otherwise indicated, all numbers expressing quantities, measurement of properties, and so forth used in the specification and claims are to be understood as being modified by the term "about". Accordingly, unless indicated to the contrary, the numerical parameters set forth in the specification and claims are approximations that can vary depending on the desired properties sought to be obtained by those skilled in the art utilizing the teachings of the present application. Not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, to the extent any numerical values are set forth in specific examples described herein, they are reported as precisely as reasonably possible. Any numerical value, however, may well contain errors associated with testing or measurement limitations.

Various modifications and alterations of this invention will be apparent to those skilled in the art without departing from the scope of this invention, and it should be understood that this invention is not limited to the illustrative embodiments set forth herein. For example, the disclosed transparent conductive articles may also include an anti-reflective coating and/or a protective hard coat. The reader should assume that features of one disclosed embodiment can also be applied to all other disclosed embodiments unless otherwise indicated.

**Claims**

1. A film stack (205; 410), comprising:

a first film (112; 212) having first transmissive facets (116) formed thereon that define a plurality of first Fresnel lenses, each of the first Fresnel lenses extending generally parallel to a first in-plane axis (212a); and
a second film (162; 262) having second transmissive facets (166) formed thereon that define a plurality of second Fresnel lenses, each of the second Fresnel lenses extending generally parallel to a second in-plane axis (262a), the second film being disposed to intercept light transmitted by the first Fresnel lenses;

wherein the second in-plane axis (262a) is disposed to be non-parallel to the first in-plane axis (212a), **characterized in that** at least some of the first Fresnel lenses (417; 517; 617b; 1217b), and at least some of the second Fresnel lenses (417; 517; 617b; 1217b), are configured as a negative Fresnel lens to defocus incident parallel light.

2. The film stack of claim 1, further comprising:
a diffuser disposed to scatter light transmitted by the first and/or second Fresnel lenses (417; 517; 617a, 617b; 1217a, 1217b).

3. The film stack of claim 2, wherein the diffuser has a haze in a range from 10 to 90%.

4. The film stack of claim 2, wherein the diffuser is incorporated into the first film (112; 212) and/or the second film (162; 262).

5. The film stack of claim 1, wherein the first and second in-plane axes (212a, 262a) form an angle ($\phi$) in a range from 2 to 90 degrees.

6. The film stack of claim 1, wherein the plurality of first Fresnel lenses is **characterized by** a first average width and the plurality of second Fresnel lenses is **characterized by** a second average width different from the first average width.

7. The film stack of claim 1, wherein the plurality of first Fresnel lenses is **characterized by** a first average pitch and the plurality of second Fresnel lenses is **characterized by** a second average pitch different from the first average pitch.

8. The film stack of claim 1, wherein at least some of the first Fresnel lenses (617a; 1217a), and at least some of the second Fresnel lenses (617a; 1217a), are configured as a positive Fresnel lens to focus incident parallel light.

9. The film stack of claim 1, wherein the first Fresnel lenses are arranged to alternate between positive Fresnel lenses (617a; 1217a) configured to focus incident parallel light and negative Fresnel lenses (617b; 1217b) configured to defocus incident parallel light.

10. The film stack of claim 9, wherein the positive and negative Fresnel lenses (617a, 617b; 1217a, 1217b) are contiguous to each other.

11. The film stack of claim 1, wherein the first Fresnel lenses each have a length-to-width aspect ratio, and the aspect ratios of the plurality of first Fresnel lenses are each greater than 10.

12. The film stack of claim 1, wherein the first Fresnel lenses are each straight in plan view, the second Fresnel lenses are each straight in plan view, and the first and second Fresnel lenses in combination produce an undulating pattern in plan view.

13. A decorative article comprising the film stack of any one of the preceding claims.

**Patentansprüche**

1. Folienstapel (205; 410), der Folgendes aufweist:

eine erste Folie (112; 212) mit daran ausgebildeten ersten, durchlässigen Facetten (116), die mehrere erste Fresnel-Linsen definieren, wobei sich jede der ersten Fresnel-Linsen im Allgemeinen parallel zu einer ersten, in einer Ebene liegenden Achse (212a) erstreckt; und
eine zweite Folie (162; 262) mit daran ausgebildeten zweiten, durchlässigen Facetten (166), die mehrere zweite Fresnel-Linsen definieren, wobei jede der zweiten Fresnel-Linsen im Allgemeinen parallel zu einer zweiten, in der Ebene liegenden Achse (262a) verläuft, wobei die zweite Folie so angeordnet ist, dass sie von den ersten Fresnel-Linsen übertragenes Licht empfängt;
wobei die zweite, in der Ebene liegende Achse (262a) so angeordnet ist, dass sie nicht parallel zu der ersten, in der Ebene liegenden Achse (212a) verläuft, **dadurch gekennzeichnet, dass**
zumindest einige der ersten Fresnel-Linsen (417; 517; 617b; 1217b) und zumindest einige der zweiten Fresnel-Linsen (417; 517; 617b; 1217b) als negative Fresnel-Linse konfiguriert sind, um einfallendes paralleles Licht zu defokussieren.

2. Folienstapel nach Anspruch 1, der ferner Folgendes aufweist:
einen Diffusor, der angeordnet ist, Licht zu streuen, das durch die erste und/oder zweite Fresnel-Linse (417; 517; 617a, 617b; 1217a, 1217b) transmittiert wird.

3. Folienstapel nach Anspruch 2, wobei der Diffusor eine Opazität in einem Bereich von 10 bis 90 % aufweist.

4. Folienstapel nach Anspruch 2, wobei der Diffusor in der ersten Folie (112; 212) und/oder der zweiten Folie (162; 262) enthalten ist.

5. Folienstapel nach Anspruch 1, wobei die erste und die zweite, in der Ebene liegende Achse (212a, 262a) einen Winkel ($\phi$) in einem Bereich von 2 bis 90 Grad bilden.

6. Folienstapel nach Anspruch 1, wobei die mehreren ersten Fresnel-Linsen **gekennzeichnet sind durch** eine erste durchschnittliche Breite und die mehreren zweiten Fresnel-Linsen **gekennzeichnet sind durch** eine zweite durchschnittliche Breite, die sich von der ersten durchschnittlichen Breite unterscheidet.

7. Folienstapel nach Anspruch 1, wobei die mehreren ersten Fresnel-Linsen **gekennzeichnet sind durch** einen ersten durchschnittlichen Abstand und die mehreren zweiten Fresnel-Linsen **gekennzeichnet sind durch** einen zweiten durchschnittlichen Abstand, der sich von dem ersten durchschnittlichen Abstand unterscheidet.

8. Folienstapel nach Anspruch 1, wobei zumindest einige der ersten Fresnel-Linsen (617a; 1217a) und zumindest einige der zweiten Fresnel-Linsen (617a; 1217a) als eine positive Fresnel-Linse konfiguriert sind, um einfallendes paralleles Licht zu fokussieren.

9. Folienstapel nach Anspruch 1, wobei die ersten Fresnel-Linsen so angeordnet sind, dass sie zwischen positiven Fresnel-Linsen (617a; 1217a), die dafür konfiguriert sind, einfallendes paralleles Licht zu fokussieren, und negativen Fresnel-Linsen (617b; 1217b) die dafür konfiguriert sind, einfallendes paralleles Licht zu defokussieren, wechseln.

10. Folienstapel nach Anspruch 9, wobei die positiven und negativen Fresnel-Linsen (617a, 617b; 1217a, 1217b) aneinander angrenzen.

11. Folienstapel nach Anspruch 1, wobei die ersten Fresnel-Linsen jeweils ein Längen-Breiten-Seitenverhältnis aufweisen und die Seitenverhältnisse der mehreren ersten Fresnel-Linsen jeweils größer als 10 sind.

12. Folienstapel nach Anspruch 1, wobei die ersten Fresnel-Linsen in Draufsicht jeweils gerade sind, die zweiten Fresnel-Linsen in Draufsicht jeweils gerade sind und die ersten und zweiten Fresnel-Linsen in Kombination in Draufsicht ein wellenförmiges Muster erzeugen.

13. Dekorativer Gegenstand, aufweisend den Folienstapel nach einem der vorstehenden Ansprüche.

**Revendications**

1. Empilement de films (205 ; 410), comprenant :

un premier film (112 ; 212) ayant des premières facettes transmissives (116) formées sur celui-ci, qui définissent une pluralité de premières lentilles de Fresnel, chacune des premières lentilles de Fresnel s'étendant généralement parallèle à un premier axe dans le plan (212a) ; et un deuxième film (162 ; 262) ayant des deuxièmes facettes transmissives (166) formées sur celui-ci qui définissent une pluralité de deuxièmes lentilles de Fresnel, chacune des deuxièmes lentilles de Fresnel s'étendant généralement parallèle à un deuxième axe dans le plan (262a), le deuxième film étant disposé pour intercepter la lumière transmise par les premières lentilles de Fresnel ; dans lequel le deuxième axe dans le plan (262a) est disposé pour être non parallèle au premier axe dans le plan (212a), **caractérisé en ce que** au moins certaines des premières lentilles de Fresnel (417 ; 517 ; 617b ; 1217b) et au moins certaines des deuxièmes lentilles de Fresnel (417 ; 517 ; 617b ; 1217b), sont configurées comme une lentille de Fresnel négative pour défocaliser une lumière parallèle incidente.

2. Empilement de films selon la revendication 1, comprenant en outre :
un diffuseur disposé pour disperser la lumière transmise par les premières et/ou deuxièmes lentilles de Fresnel (417 ; 517 ; 617a, 617b ; 1217a, 1217b).

3. Empilement de films selon la revendication 2, dans lequel le diffuseur a un trouble dans une plage allant de 10 à 90 %.

4. Empilement de films selon la revendication 2, dans lequel le diffuseur est incorporé dans le premier film (112 ; 212) et/ou le deuxième film (162 ; 262).

5. Empilement de films selon la revendication 1, dans lequel les premier et deuxième axes dans le plan (212a, 262a) forment un angle ($\varphi$) dans une plage allant de 2 à 90 degrés.

6. Empilement de films selon la revendication 1, dans lequel la pluralité de premières lentilles de Fresnel est **caractérisée par** une première largeur moyenne et la pluralité de deuxièmes lentilles de Fresnel est **caractérisée par** une deuxième largeur moyenne différente de la première largeur moyenne.

7. Empilement de films selon la revendication 1, dans lequel la pluralité de premières lentilles de Fresnel est **caractérisée par** un premier pas moyen et la pluralité de deuxièmes lentilles de Fresnel est **caractérisée par** un deuxième pas moyen différent du premier pas moyen.

8. Empilement de films selon la revendication 1, dans lequel au moins certaines des premières lentilles de Fresnel (617a ; 1217a), et au moins certaines des deuxièmes lentilles de Fresnel (617a ; 1217a), sont configurées en tant que lentille de Fresnel positive pour focaliser une lumière parallèle incidente.

9. Empilement de films selon la revendication 1, dans lequel les premières lentilles de Fresnel sont agencées pour alterner entre des lentilles de Fresnel positives (617a ; 1217a) configurées pour focaliser une lumière parallèle incidente et des lentilles de Fresnel négatives (617b ; 1217b) configurées pour défocaliser une lumière parallèle incidente.

10. Empilement de films selon la revendication 9, dans lequel les lentilles de Fresnel positives et négatives (617a, 617b ; 1217a, 1217b) sont contiguës les unes par rapport aux autres.

11. Empilement de films selon la revendication 1, dans lequel les premières lentilles de Fresnel ont chacune un rapport d'aspect longueur sur largeur, et les rapports d'aspect de la pluralité de premières lentilles de Fresnel sont chacun supérieurs à 10.

12. Empilement de films selon la revendication 1, dans lequel les premières lentilles de Fresnel sont chacune linéaires en vue en plan, les deuxièmes lentilles de Fresnel sont chacune linéaires en vue en plan, et les premières et deuxièmes lentilles de Fresnel en combinaison produisent un motif ondulant en vue en plan.

13. Article décoratif comprenant l'empilement de films selon l'une quelconque des revendications précédentes.

*FIG. 1*

$$FIG.\ 2$$

FIG. 3

FIG. 4

EP 2 870 494 B1

*FIG. 4a*

*FIG. 5*

*FIG. 6*

*FIG. 6a*

FIG. 7

FIG. 8

910

*FIG. 9*

*FIG. 10*

FIG. 11

*FIG. 12*

EP 2 870 494 B1

*FIG. 13*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008304586 A
- WO 9950596 A2
- US 2012060920 A1
- WO 2010120864 A, Hao
- WO 2011088161 A, Wolk
- US 6531230 B, Weber
- US 7264872 B, Walker, Jr.